(19) Europäisches Patentamt / European Patent Office / Office européen des brevets

(11) **EP 4 559 807 A1**

(12) **DEMANDE DE BREVET EUROPEEN**

(43) Date de publication:
**28.05.2025 Bulletin 2025/22**

(21) Numéro de dépôt: **24196498.0**

(22) Date de dépôt: **26.08.2024**

(51) Classification Internationale des Brevets (IPC):
**B64C 27/00** (2006.01)   **B64C 27/12** (2006.01)
**B64D 27/02** (2006.01)   **B64D 27/33** (2024.01)
**B64D 35/08** (2025.01)   **B64D 45/00** (2006.01)

(52) Classification Coopérative des Brevets (CPC):
**B64D 35/08; B64C 27/006; B64C 27/12; B64D 27/33;** B64D 2045/0085

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **27.11.2023 FR 2313102**

(71) Demandeur: **Airbus Helicopters**
**13725 Marignane Cedex (FR)**

(72) Inventeur: **GAZZINO, Marc**
**13012 MARSEILLE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(54) **SYSTEME DE SURVEILLANCE POUR SURVEILLER UNE INSTALLATION MOTRICE HYBRIDE DE GIRAVION, GIRAVION ET PROCEDE ASSOCIES**

(57)    La présente invention concerne un système de surveillance (1) pour surveiller une installation motrice hybride (2) de giravion (3) comportant au moins un rotor (4), ladite installation motrice hybride (2) comportant un moteur électrique (5) comportant un premier arbre moteur (15), un moteur thermique (8) comportant un second arbre moteur (18) et une boite de transmission de puissance (9).

Le système de surveillance comportant au moins un premier senseur (16, 17, 19) mesurant une première information de couple représentative d'un premier couple moteur C1 transmis par le premier arbre moteur (15) à un premier arbre d'entrée (10) boite de transmission de puissance (9) et un contrôleur (31) comparant ledit premier couple moteur C1 avec une première valeur limite VL1.

**Fig.1**

## Description

La présente invention concerne le domaine des installations motrices hybrides de giravion comportant à la fois un moteur thermique et un moteur électrique aptes à transmettre en parallèle un couple moteur respectivement à des arbres d'entrée d'une boîte de transmission de puissance. Un arbre de sortie de la boîte de transmission de puissance est quant à lui relié à au moins un rotor et permet de l'entraîner en rotation.

En outre par la suite, le terme « rotor » peut désigner notamment un rotor de sustentation, un rotor anti-couple permettant de contrôler les mouvements de lacet du giravion ou une hélice propulsive ou tractive.

L'invention propose une solution pour surveiller le comportement mécanique d'une telle installation motrice hybride afin de détecter les couples excessifs lorsque les moteurs thermiques et électriques fonctionnent simultanément, et de protéger la boîte de transmission de puissance en cas de panne ou dépassement de limites.

Le dépassement de limites de couple est en effet une situation indésirable pouvant générer un endommagement de la boîte de transmission de puissance.

En outre, le document US2019382124 D1 concerne procédé et un dispositif de limitation de couple sur un giravion comprenant au moins trois moteurs (10) non équirépartis en puissance, ces moteurs (10) pouvant être thermiques (12, 13) et électriques (11).

Un calculateur de gestion (75) peut calculer pour chaque moteur (11, 12, 13) un coefficient de répartition (alpha, beta, gama) qui est l'image du pourcentage de la puissance totale (ptot) à fournir par ce moteur.

Chaque coefficient de répartition peut être déterminé à l'aide de lois et/ou de tableaux de valeur ou équivalent qui sont mémorisées dans le giravion, par exemple dans une mémoire (77) du calculateur de gestion (75).

Le calculateur de gestion (75) calcule pour chaque moteur (11, 12, 13) une limite de couple moteur (limcouplemoteur1, limcouplemoteur2, limcouplemoteur3) associée en prenant en considération le coefficient de répartition (alpha, beta, gama) affecté à ce moteur.

La limite de couple moteur (limcouplemoteur1, limcouplemoteur2, limcouplemoteur3) affectée à un moteur est égale au minimum entre la limite de couple d'entrée de boîte (limcoupleboite1, limcoupleboite2, limcoupleboite3) affectée à ce moteur et une limite intermédiaire (limint) affectée à ce moteur.

Le couple moteur courant affecté à un moteur (11, 12, 13) peut être mesuré avec un couplemètre sur l'arbre de sortie (21, 22, 23) de ce moteur (11, 12, 13).

Dès lors, chaque calculateur moteur (61, 62, 63) régule le moteur qu'il contrôle en fonction du couple moteur courant affecté à ce moteur et de la limite de couple moteur (limcouplemoteur1, limcouplemoteur2, limcouplemoteur3) affecté à ce moteur.

Chaque calculateur moteur (61, 62, 63) peut notamment contrôler un doseur de carburant associé à chaque moteur.

De plus, trois arbres de sorties (21, 22, 23) peuvent être reliés respectivement à trois arbres d'entrées (31, 32, 33) par trois roues libres (51) et trois arbres de liaison (52).

Les documents FR3122407 et US2020277072 se rapportent quant à eux à d'autres systèmes de transmission entre un moteur électrique et un rotor d'aéronef.

La présente invention a alors pour objet de proposer un système de surveillance innovant visant à protéger une boîte de transmission de puissance mise en mouvement par une installation motrice hybride.

L'invention se rapporte donc à un système de surveillance pour surveiller une installation motrice hybride de giravion comportant au moins un rotor, l'installation motrice hybride comportant :

- un moteur électrique connecté électriquement par une liaison électrique à au moins une source d'énergie électrique, le moteur électrique comportant un premier arbre moteur,

- un moteur thermique comportant un second arbre moteur, et

- une boite de transmission de puissance comportant :

  ○ un premier arbre d'entrée connecté par une première liaison mécanique au premier arbre moteur,

  ○ un second arbre d'entrée connecté par une deuxième liaison mécanique au second arbre moteur, et

  ○ un arbre de sortie connecté par une troisième liaison mécanique audit au moins un rotor.

- au moins un premier senseur mesurant une première information de couple représentative d'un premier couple moteur C1 transmis par le premier arbre moteur au premier arbre d'entrée, et

- une mémoire stockant une première valeur limite VL1 relative au premier couple moteur C1.

- Selon l'invention, un tel système de surveillance est remarquable en ce qu'il comporte un contrôleur comparant le premier couple moteur C1 avec la première valeur limite VL1 et commandant en conséquence un premier dispositif réversible de transmission configuré pour transmettre, et alternativement, empêcher la transmission du premier couple moteur C1, le premier dispositif réversible de transmission étant commandé pour permettre au premier arbre moteur d'entraîner en rotation le premier arbre d'entrée lorsque le premier couple moteur C1 est inférieur à la première valeur limite VL1 et pour empêcher le premier arbre moteur d'entraîner en rotation le premier arbre d'entrée lorsque le premier couple moteur C1 est supérieur ou égal à la première valeur limite VL1.

Autrement dit, la mesure de la première information de couple permet de déterminer directement la valeur du premier couple moteur C1 ou encore de calculer cette valeur du premier couple moteur C1. Le premier couple moteur C1 est donc une valeur courante qui peut varier en fonction des besoins en couple lors d'une manoeuvre effectuée par le giravion, de la charge embarquée à bord du giravion et des conditions extérieures telles que la pression atmosphérique et la force du vent. En outre la charge embarquée peut être saisie par un pilote ou éventuellement être mesurée et comprendre la masse du carburant embarqué et la masse de l'équipage présent dans le giravion.

La première valeur limite VL1 est quant à elle prédéterminée et fixe. Elle peut notamment être déterminée par des tests, des essais en vol ou des simulations. En outre, cette première valeur limite VL1 peut être spécifique au giravion ou encore à l'installation motrice hybride.

Le contrôleur surveille alors les variations du premier couple moteur C1 et lorsque ce premier couple moteur C1 devient égal ou supérieur à la première valeur limite VL1, il génère un ordre de commande qui est transmis au premier dispositif réversible de transmission. Cet ordre de commande vise alors à empêcher, au moins temporairement, le premier arbre moteur d'entraîner en rotation le premier arbre d'entrée et donc empêche le premier couple moteur C1 d'être transmis au premier arbre d'entrée.

Le couple moteur total transmis à l'arbre de sortie est alors fonction uniquement de celui fourni par le moteur thermique via la deuxième liaison mécanique et le second arbre d'entrée.

Cet ordre de commande peut par ailleurs être maintenu jusqu'à la fin du vol ou encore pendant une durée prédéterminée permettant au pilote du giravion d'agir sur les commandes de pilotage du giravion.

De manière avantageuse, un affichage d'informations représentatives du premier couple moteur C1 et de la première valeur limite VL1 peut alors permettre au pilote du giravion d'agir sur des commandes de vol pour réduire la valeur du premier couple moteur C1 avant d'atteindre la première valeur limite VL1.

En outre, plusieurs réalisations du premier dispositif réversible de transmission peuvent être envisagées.

Ainsi, selon une première réalisation, le premier dispositif réversible de transmission peut comporter un premier embrayage positionné dans la première liaison mécanique, le premier embrayage étant agencé dans un état embrayé lorsque le premier couple C1 est inférieur à la première valeur limite VL1 et le premier embrayage étant agencé dans un état débrayé lorsque le premier couple C1 est supérieur ou égal à la première valeur limite VL1.

Un tel premier embrayage peut ainsi être piloté mécaniquement, hydrauliquement ou électriquement par le contrôleur. Lorsque le premier embrayage est agencé dans l'état débrayé, le premier couple moteur C1 est alors immédiatement annulé par une rupture réversible ou un désengagement de la transmission mécanique dans la première liaison mécanique.

Selon une seconde réalisation, le premier dispositif réversible de transmission peut comporter un commutateur électrique positionné dans la liaison électrique, le commutateur électrique étant agencé dans un état fermé lorsque le premier couple C1 est inférieur à la première valeur limite VL1 et le commutateur électrique étant agencé dans un état ouvert lorsque le premier couple est supérieur ou égal à la première valeur limite VL1.

Un tel commutateur peut par exemple être un relais ou un interrupteur piloté électriquement par le contrôleur. Dans ce cas, lorsque le commutateur est agencé dans l'état ouvert, le premier couple C1 est alors immédiatement annulé par une coupure réversible d'alimentation en énergie électrique dans la liaison électrique.

Avantageusement, la liaison électrique peut comporter un onduleur transformant un courant électrique continu de l'électricité stockée dans ladite au moins une source d'énergie électrique en un courant électrique alternatif alimentant en électricité le moteur électrique, le commutateur électrique étant positionné selon un sens de circulation du courant électrique entre la au moins une source d'énergie électrique et l'onduleur.

Ainsi, le commutateur électrique peut couper l'alimentation en électricité du moteur électrique en ouvrant son circuit d'alimentation électrique entre la ou les sources d'énergie électrique et l'onduleur.

Selon une alternative, le commutateur électrique peut être positionné selon un sens de circulation du courant électrique entre l'onduleur et au moins une borne d'alimentation en électricité du moteur électrique.

Dans ce cas, le commutateur électrique peut couper l'alimentation en électricité du moteur électrique en ouvrant son circuit d'alimentation électrique entre l'onduleur et une borne d'alimentation du moteur électrique.

En pratique, ledit au moins un premier senseur peut comporter un capteur de tension mesurant une tension électrique d'alimentation entre deux bornes d'alimentation en électricité du moteur électrique, ledit au moins un premier senseur comportant un capteur d'intensité mesurant une intensité électrique d'alimentation du courant électrique circulant dans la liaison électrique.

Par suite, le système de surveillance peut comporter des capteurs de tension et d'intensité aptes à mesurer la puissance électrique consommée par le moteur électrique.

De manière alternative ou complémentaire, ledit au moins un premier senseur peut comporter un capteur de vitesse de rotation mesurant une vitesse de rotation du premier arbre moteur par rapport à un carter du moteur électrique.

Ainsi, connaissant la puissance électrique consommée par le moteur électrique, le rendement du moteur électrique et la vitesse de rotation du premier arbre moteur, le contrôleur peut calculer le premier couple moteur transmis par le premier arbre moteur au premier arbre d'entrée selon la formule :

$$C1 = \frac{U * I * \rho}{\omega}$$

où U est la tension électrique d'alimentation entre deux bornes d'alimentation en électricité du moteur électrique,

I est l'intensité électrique d'alimentation du courant électrique circulant dans la liaison électrique,

ρ est le rendement du moteur électrique, et

ω est la vitesse de rotation du premier arbre moteur.

Avantageusement et quelle que soit la réalisation de l'installation motrice, le système de surveillance peut comporter :

- au moins un deuxième senseur mesurant une deuxième information de couple représentative d'un deuxième couple moteur C2 transmis par le second arbre moteur au second arbre d'entrée,

- la mémoire stockant une deuxième valeur limite VL2 relative au deuxième couple moteur C2, et

- le contrôleur comparant le deuxième couple moteur C2 avec la deuxième valeur limite VL2 et commandant un second dispositif réversible de transmission configuré pour transmettre, et alternativement, empêcher la transmission du deuxième couple moteur C2, le second dispositif réversible de transmission étant commandé pour permettre au second arbre moteur d'entraîner en rotation le second arbre d'entrée lorsque le deuxième couple moteur C2 est inférieur la deuxième valeur limite VL2 et pour empêcher le second arbre moteur d'entraîner en rotation le second arbre d'entrée lorsque le deuxième couple moteur C2 est supérieur ou égal à la deuxième valeur limite VL2.

Autrement dit, la mesure de la deuxième information de couple permet de déterminer directement la valeur du deuxième couple moteur C2 ou encore de calculer cette valeur du deuxième couple moteur C2.

Le deuxième couple moteur C2 est donc également une valeur courante qui peut varier en fonction des besoins en couple lors d'une manoeuvre effectuée par le giravion, de la charge embarquée à bord du giravion et des conditions extérieures telles que la pression atmosphérique et la force du vent.

La deuxième valeur limite VL2 est quant à elle prédéterminée et fixe. Elle peut notamment être déterminée par des tests, des essais en vol ou des simulations et être spécifique au giravion ou à l'installation motrice.

Le contrôleur surveille alors les variations du deuxième couple moteur C2 et lorsque ce deuxième couple moteur C2 est supérieur ou égal à la deuxième valeur limite VL2, il génère un ordre de commande qui est transmis au second dispositif réversible de transmission du deuxième couple moteur C2. Cet ordre de commande vise alors à empêcher, au moins temporairement, le second arbre moteur d'entraîner en rotation le second arbre d'entrée et donc annule le second couple moteur C2.

Le couple moteur total transmis à l'arbre de sortie est alors nul ou égal au premier couple moteur C1.

Cet ordre de commande peut par ailleurs être maintenu jusqu'à la fin du vol ou encore pendant une durée prédéterminée permettant au pilote du giravion d'agir sur les commandes de pilotage du giravion.

Par ailleurs, un affichage d'informations représentatives du deuxième couple moteur C2 et de la deuxième valeur limite VL2 peut alors permettre au pilote du giravion d'agir sur des commandes de vol pour réduire la valeur du deuxième couple moteur C2 avant d'atteindre la deuxième valeur limite VL2.

Selon un premier exemple de réalisation, le second dispositif réversible de transmission peut comporter un second embrayage positionné dans la deuxième liaison mécanique, le second embrayage étant agencé dans un état embrayé lorsque le deuxième couple moteur C2 est inférieur à la deuxième valeur limite VL2 et l'embrayage étant agencé dans un état débrayé lorsque le deuxième couple C2 est égal ou supérieur à la deuxième valeur limite VL2.

Un tel second embrayage peut ainsi être piloté mécaniquement, hydrauliquement ou électriquement par le contrôleur. Lorsque le second embrayage est agencé dans l'état débrayé, le second couple moteur C2 est alors immédiatement annulé ou empêché d'être transmis par une rupture réversible ou un désengagement de la transmission mécanique dans la seconde liaison mécanique.

Selon un deuxième exemple de réalisation, le second dispositif réversible de transmission peut comporter un doseur de carburant alimentant en carburant le moteur thermique, le doseur de carburant étant agencé dans un état passant avec un débit de carburant non nul lorsque le deuxième couple moteur C2 est inférieur à la deuxième valeur limite VL2 et le doseur de carburant étant agencé dans un état bloqué sans débit de carburant lorsque le deuxième couple moteur C2 est égal ou supérieur à la deuxième valeur limite VL2.

Ainsi, le doseur de carburant peut couper l'alimentation en carburant du moteur thermique en arrêtant un débit de carburant circulant dans un circuit d'alimentation en carburant entre le réservoir et une chambre de combustion du moteur thermique.

Selon un troisième exemple de réalisation, le second dispositif réversible de transmission peut comporter une valve de coupure alimentant en carburant un doseur de carburant, la valve de coupure carburant étant agencée en position ouverte avec un débit de carburant non nul lorsque le deuxième couple moteur C2 est inférieur à la deuxième valeur limite VL2 et la valve de coupure étant agencée dans une position fermée pour couper le débit de carburant lorsque le deuxième couple moteur C2 est égal ou supérieur à la deuxième valeur limite VL2.

Par suite, une telle valve de coupure est indépendante du doseur de carburant afin d'éviter qu'une panne du doseur de carburant, par exemple bloqué un état passant avec un débit de carburant non nul, empêche le second dispositif réversible de transmission de couper le moteur thermique et donc d'annuler la transmission du deuxième couple moteur C2.

En pratique dans le deuxième exemple de réalisation et le troisième exemple de réalisation, le second dispositif réversible de transmission comporte également une roue libre agencée entre le second arbre moteur et le second arbre d'entrée afin de désaccoupler automatiquement le moteur thermique lorsque celui-ci n'est plus alimenté en carburant.

En pratique, ledit au moins un second senseur peut comporter un couplemètre mesurant directement le deuxième couple moteur C2.

Un tel couplemètre peut alors être agencé dans la deuxième liaison mécanique entre le second arbre moteur et le second arbre d'entrée.

Avantageusement et quelles que soit les réalisations précédentes, le système de surveillance peut comporter :

- au moins un troisième senseur mesurant une troisième information de couple représentative d'un troisième couple moteur C3 transmis par l'arbre de sortie audit au moins un rotor,

- la mémoire stockant une troisième valeur limite VL3 relative au troisième couple moteur C3, et

- le contrôleur comparant le troisième couple moteur C3 avec la troisième valeur limite VL3 et commandant au moins un dispositif réversible de transmission parmi les premier et second dispositifs réversibles de transmission, ledit au moins un dispositif réversible de transmission étant commandé pour permettre aux premier et second arbres moteur d'entraîner en rotation les premier et second arbres d'entrée lorsque le troisième couple moteur C3 est inférieur la troisième valeur limite VL3 et pour empêcher un au moins des premier et second arbres moteur d'entraîner en rotation respectivement le premier ou le second arbre d'entrée lorsque le troisième couple moteur C3 est supérieur ou égal à la troisième valeur limite VL3.

Autrement dit, la mesure de la troisième information de couple permet de déterminer directement la valeur du troisième couple moteur C3 ou encore de calculer cette valeur du troisième couple moteur C3. Le troisième couple moteur C3 est donc également une valeur courante qui peut varier en fonction des besoins en couple lors d'une manoeuvre particulière effectuée par le giravion, de la charge embarquée à bord du giravion et des conditions extérieures telles que la pression atmosphérique et la force du vent.

Alternativement, le système de surveillance peut être dépourvu d'un senseur mesurant une troisième information de couple représentative d'un troisième couple moteur C3 transmis par l'arbre de sortie. Dans ce cas, la valeur du troisième couple moteur C3 peut être déterminée directement par le contrôleur en calculant la somme du premier couple moteur C1 et du deuxième couple moteur C2.

Peu importe que la troisième couple moteur C3 soit mesurée ou calculée, la troisième valeur limite VL3 est quant à elle prédéterminée et fixe. Elle peut notamment être déterminée par des tests, des essais en vol ou des simulations.

Le contrôleur surveille alors les variations du troisième couple moteur C3 et lorsque ce troisième couple moteur C3 est supérieur ou égal à la troisième valeur limite VL3, il génère un ordre de commande qui est transmis à l'un au moins des premier et second dispositifs réversibles de transmission du premier et second couple moteur. Cet ordre de commande vise alors à empêcher, au moins temporairement, le premier et/ou le second arbre moteur d'entraîner en rotation le premier et/ou le second arbre d'entrée et donc annule le premier couple moteur C1 et/ou le second couple moteur C2.

Le couple moteur total transmis à l'arbre de sortie peut alors être égal au premier couple moteur C1, au second couple moteur C2 ou être nul.

Cet ordre de commande peut par ailleurs être maintenu jusqu'à la fin du vol ou encore pendant une durée prédéterminée permettant au pilote du giravion d'agir sur les commandes de pilotage du giravion afin de faire décroître le troisième couple moteur C3 en dessous de la troisième valeur limite VL3 lorsque dépassement de la troisième valeur limite VL3 est dû à une manoeuvre du pilote.

Selon une première variante de réalisation de l'invention, lorsque le troisième couple moteur C3 est supérieur ou égal à la troisième valeur limite VL3, le contrôleur peut commander d'abord le premier dispositif réversible de transmission pour empêcher le premier arbre moteur d'entraîner en rotation le premier arbre d'entrée, puis, si le troisième couple moteur C3 reste supérieur ou égal à la troisième valeur limite VL3 après la commande du premier dispositif réversible de transmission, le contrôleur commande le second dispositif réversible de transmission pour empêcher le second arbre moteur d'entraîner en rotation le second arbre d'entrée.

Dans ce cas, le contrôleur génère donc, dans un premier temps, un premier ordre de commande qui est transmis au premier dispositif réversible de transmission du premier couple moteur C1 et, dans un second temps, un second ordre de commande qui est transmis au second dispositif réversible de transmission du deuxième couple moteur C2. Le contrôleur permet ainsi d'empêcher séquentiellement la transmission du premier couple moteur C1 au premier arbre d'entrée puis du second couple moteur C2 au second arbre d'entrée.

Selon une seconde variante de réalisation de l'invention, lorsque le troisième couple moteur C3 est supérieur ou égal à la troisième valeur limite VL3, le contrôleur peut commander simultanément le premier dispositif réversible de transmission pour empêcher le premier arbre moteur d'entraîner en rotation le premier arbre d'entrée et le second dispositif réversible de transmission pour empêcher le second arbre moteur d'entraîner en rotation le second arbre d'entrée.

Selon une troisième variante de réalisation de l'invention, lorsque le troisième couple moteur C3 est supérieur ou égal à la troisième valeur limite VL3, le contrôleur peut tout d'abord identifier un moteur le plus puissant et un moteur le moins puissant parmi le moteur électrique et le moteur thermique puis commander d'abord un dispositif réversible de transmission correspondant au moteur le moins puissant, puis, si le troisième couple moteur C3 reste supérieur ou égal à la troisième valeur limite VL3, l'autre dispositif réversible de transmission correspondant au moteur le plus puissant.

Une telle troisième variante de réalisation de l'invention permet ainsi de maintenir au maximum une disponibilité de la puissance de propulsion pour le giravion.

Selon une quatrième variante de réalisation de l'invention, lorsque le troisième couple moteur C3 est supérieur ou égal à la troisième valeur limite VL3, le contrôleur peut tout d'abord identifier un moteur avec un maximum d'énergie disponible et un moteur avec un minimum d'énergie disponible parmi le moteur électrique et le moteur thermique puis commander d'abord un dispositif réversible de transmission correspondant au moteur avec le minimum d'énergie disponible puis, si le troisième couple moteur C3 reste supérieur ou égal à la troisième valeur limite VL3, l'autre dispositif réversible de transmission correspondant au moteur avec le maximum d'énergie disponible.

Une telle quatrième variante de réalisation de l'invention permet ainsi de privilégier une durée de vol maximale pour le giravion.

En outre, le choix entre les différentes variantes de réalisation de l'invention peut être fonction par exemple d'un type de mission réalisé ou encore être arbitraire selon des préférences de pilotage d'un pilote.

Dans ce cas le contrôleur génère donc en même temps un premier ordre de commande qui est transmis au premier dispositif réversible de transmission du premier couple moteur C1 et un second ordre de commande qui est transmis au second dispositif réversible de transmission du deuxième couple moteur C2. Le contrôleur permet alors d'annuler simultanément le premier couple moteur C1 et le second couple moteur C2.

L'invention concerne également un giravion comportant une installation motrice hybride précitée et au moins un rotor.

Un tel giravion est remarquable en ce qu'il comporte un système de surveillance précité de l'installation motrice hybride.

La présente invention a aussi pour objet un procédé de surveillance pour surveiller une installation motrice hybride de giravion comportant au moins un rotor, l'installation motrice hybride comportant :

- un moteur électrique connecté électriquement par une liaison électrique à au moins une source d'énergie électrique, le moteur électrique comportant un premier arbre moteur,

- un moteur thermique comportant un second arbre moteur, et

- une boite de transmission de puissance comportant :

  ○ un premier arbre d'entrée connecté par une première liaison mécanique au premier arbre moteur,

  ○ un second arbre d'entrée connecté par une deuxième liaison mécanique au second arbre moteur, et

  ○ un arbre de sortie connecté par une troisième liaison mécanique audit au moins un rotor.

Un tel procédé comporte au moins les étapes suivantes :

- mesure avec au moins un senseur d'une première information de couple représentative d'un premier couple moteur C1 transmis par le premier arbre moteur au premier arbre d'entrée, et

- comparaison avec un contrôleur entre le premier couple moteur C1 et une première valeur limite VL1. Selon l'invention, un tel procédé est remarquable en ce qu'il comporte une commande avec le contrôleur d'un premier dispositif réversible de transmission configuré pour transmettre, et alternativement, empêcher la transmission du premier couple moteur C1, le premier dispositif réversible de transmission étant commandé pour permettre au premier arbre moteur d'entraîner en rotation le premier arbre d'entrée lorsque le premier couple moteur C1 est inférieur à la première valeur limite VL1 et pour empêcher le premier arbre moteur d'entraîner en rotation le premier arbre d'entrée lorsque le premier couple moteur C1 est supérieur ou égal à la première valeur limite VL1.

Un tel procédé de surveillance est ainsi mis en oeuvre dans un giravion et lors d'une phase de vol du giravion pendant laquelle le couple moteur transmis au rotor varie en augmentant, par exemple lors d'une défaillance de régulation de l'installation motrice hybride ou encore d'une manoeuvre de pilotage appelant un couple important pour le rotor ou la boîte de transmission de puissance.

L'invention et ses avantages apparaîtront avec plus de détails dans le cadre de la description qui suit avec des exemples donnés à titre illustratif en référence aux figures annexées qui représentent :

la figure 1, un schéma d'un giravion équipé d'un système de surveillance conforme à l'invention,

la figure 2, un schéma de principe illustrant une première variante de la commande d'un premier dispositif réversible de transmission, conformément à l'invention,

la figure 3, un schéma de principe illustrant un premier exemple d'une seconde variante de la commande d'un premier dispositif réversible de transmission, conformément à l'invention,

la figure 4, un schéma de principe illustrant un second exemple de la seconde variante de la commande d'un premier dispositif réversible de transmission, conformément à l'invention,

la figure 5, un schéma de principe illustrant une première variante de la commande d'un second dispositif réversible de transmission, conformément à l'invention,

la figure 6, un schéma de principe illustrant une deuxième variante de la commande d'un second dispositif réversible de transmission, conformément à l'invention, et

la figure 7, un schéma de principe illustrant une troisième variante de la commande d'un second dispositif réversible de transmission, conformément à l'invention, et

la figure 8, un logigramme représentatif d'un procédé de surveillance conforme à l'invention.

Les éléments présents dans plusieurs figures distinctes sont affectés d'une seule et même référence.

Comme déjà évoqué, l'invention se rapporte à un système de surveillance pour surveiller une installation motrice hybride de giravion.

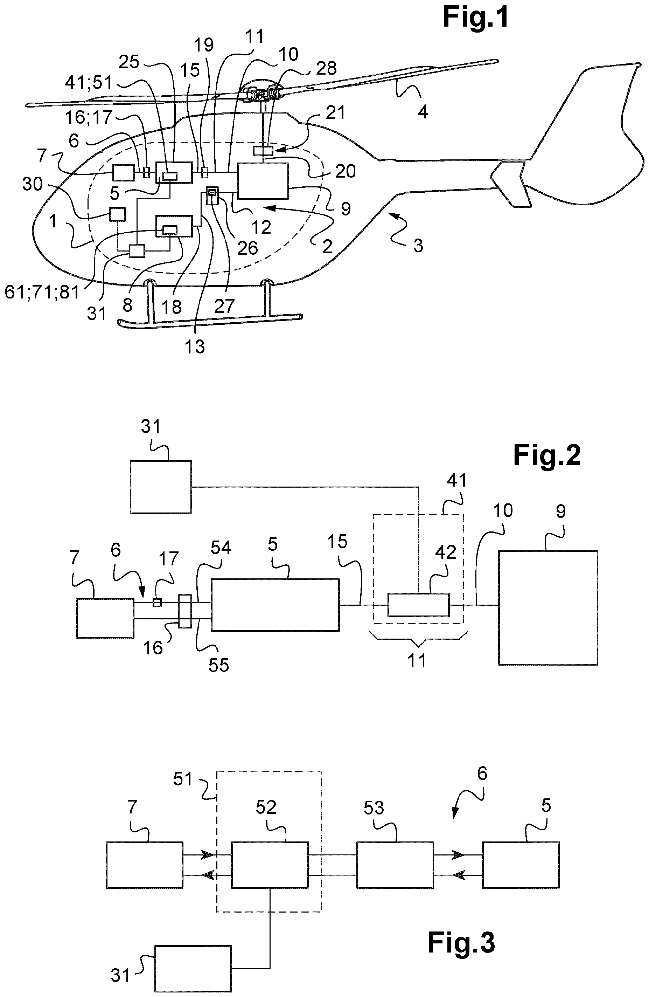

Tel que représenté à la figure 1, un tel giravion comporte au moins un rotor 4 qui peut être par exemple un rotor de sustentation, un rotor anti-couple permettant de contrôler les mouvements de lacet du giravion ou une hélice propulsive ou tractive.

En outre, une telle installation motrice hybride 2 comporte un moteur électrique 5 connecté électriquement par une liaison électrique 6 à au moins une source d'énergie électrique 7. Le moteur électrique 5 comporte ainsi un premier arbre moteur 15.

L'installation motrice hybride 2 comporte également un moteur thermique 8 comportant un second arbre moteur 18.

Par ailleurs, cette installation motrice hybride 2 comporte aussi une boite de transmission de puissance 9 comportant un premier arbre d'entrée 10, un second arbre d'entrée 12 et un arbre de sortie 20.

Le premier arbre d'entrée 10 est relié mécaniquement par une première liaison mécanique 11 au premier arbre moteur 15 et le second arbre d'entrée 12 est relié mécaniquement par une deuxième liaison mécanique 13 au second arbre moteur 18.

En outre, l'arbre de sortie 20 est quant à lui relié mécaniquement par une troisième liaison mécanique 21 audit au moins un rotor 4.

Par ailleurs, chaque liaison mécanique 11, 13 et 21 peut comprendre au moins un arbre, au moins un connecteur mécanique tel qu'une roue libre, un embrayage et un étage de réduction de la vitesse de rotation comportant des engrenages, un pignon ou une roue dentée.

Un tel système de surveillance 1 comporte au moins un premier senseur 16, 17, 19 mesurant une première information de couple représentative d'un premier couple moteur C1 transmis par le premier arbre moteur 15 au premier arbre d'entrée 10.

Un tel premier senseur 16, 17, 19 peut ainsi comporter un capteur de tension 16 et un capteur d'intensité 17 agencés dans la liaison électrique 6.

Tels que représentés plus en détail à la figure 2, le capteur de tension 16 peut mesurer une tension électrique d'alimentation entre deux bornes 54, 55 d'alimentation en électricité du moteur électrique 5 et le capteur d'intensité 17 peut mesurer une intensité électrique d'alimentation du courant électrique circulant dans la liaison électrique 6.

Par ailleurs, ledit premier senseur 16, 17, 19 peut également comporter un capteur de vitesse de rotation 19 mesurant une vitesse de rotation du premier arbre moteur 15 par rapport à un carter 25 du moteur électrique 5.

Par capteur, on entend ici un capteur physique capable de mesurer directement le paramètre en question mais aussi un système pouvant comprendre un ou plusieurs capteur(s) physique(s) ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

Le système de surveillance 1 peut alors calculer le premier couple moteur C1 fourni par le premier arbre moteur 15 au premier arbre d'entrée 10 selon la formule :

$$C1 = \frac{U * I * \rho}{\omega}$$

où U est la tension électrique d'alimentation entre les deux bornes d'alimentation 54, 55 en électricité du moteur électrique 5 ,

I est intensité électrique d'alimentation du courant électrique circulant dans la liaison électrique 6,

ρ est le rendement du moteur électrique 5, et

ω est la vitesse de rotation du premier arbre moteur 15 par rapport au carter 25.

Le système de surveillance 1 comporte une mémoire 30 stockant une première valeur limite VL1 relative au premier couple moteur C1.

Le système de surveillance 1 comporte également un contrôleur 31 qui reçoit ou calcule le premier couple moteur C1 selon par exemple la formule précédemment illustrée. Le contrôleur 31 compare le premier couple moteur C1 avec la première valeur limite VL1 et commande un premier dispositif réversible de transmission 41, 51 configuré pour transmettre, et alternativement, empêcher la transmission du premier couple moteur C1.

Ce premier dispositif réversible de transmission 41, 51 reçoit ainsi un ordre de commande du contrôleur 31 pour permettre au premier arbre moteur 15 d'entraîner en rotation le premier arbre d'entrée 10 lorsque le premier couple moteur C1 est inférieur à la première valeur limite VL1 et un autre ordre de commande pour empêcher le premier arbre moteur 15 d'entraîner en rotation le premier arbre d'entrée 10 lorsque le premier couple moteur C1 est supérieur ou égal à la première valeur limite VL1.

Le contrôleur 31 peut comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Différentes variantes du premier dispositif réversible de transmission 41, 51 sont ainsi représentées aux figures 2 à 4.

Tel que représenté à la figure 2, et selon une première variante du premier dispositif réversible de transmission 41,51, un tel premier dispositif réversible de transmission 41 peut comporter un premier embrayage 42 positionné dans la première liaison mécanique 11.

Un tel premier embrayage 42 est ainsi relié par voie filaire ou non filaire au contrôleur 31 et reçoit alors un ordre de commande du contrôleur 31 pour être dans un état embrayé lorsque le premier couple C1 est inférieur à la première valeur limite VL1. Alternativement, lorsque le premier couple C1 est égal ou supérieur à la première valeur limite VL1, le premier embrayage 42 reçoit alors un autre ordre de commande du contrôleur 31 pour être dans un état débrayé empêchant la transmission du premier couple C1 au premier arbre d'entrée 10.

Selon une seconde variante du premier dispositif réversible de transmission 41,51, le premier dispositif réversible de transmission 51 peut comporter un commutateur électrique 52 positionné dans la liaison électrique 6.

Un tel commutateur électrique 52 est en outre relié par voie filaire ou non filaire au contrôleur 31 et reçoit alors un ordre de commande du contrôleur 31 pour être dans un état fermé lorsque le premier couple C1 est inférieur à la première valeur limite VL1. Alternativement, lorsque le premier couple C1 est supérieur ou égal à la première valeur limite VL1, le commutateur électrique 52 reçoit un autre ordre de commande du contrôleur 31 pour être agencé dans un état ouvert annulant ainsi le premier couple C1.

Telle que représentée à la figure 3, cette liaison électrique 6 peut comporter un onduleur 53 transformant un courant électrique continu de l'électricité stockée dans la source d'énergie électrique 7 en un courant électrique alternatif alimentant en électricité le moteur électrique 5. Le commutateur électrique 52 peut alors, selon un premier exemple de la seconde variante, être positionné selon un sens de circulation du courant électrique entre la source d'énergie électrique 7 et l'onduleur 53.

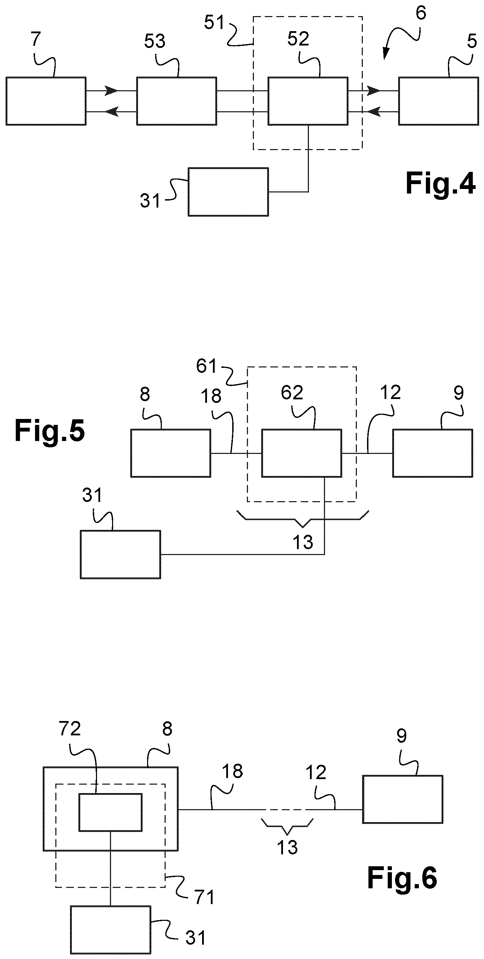

Selon un second exemple de la seconde variante telle que représentée à la figure 4, le commutateur électrique 52 peut alternativement être positionné selon un sens de circulation de l'électricité entre l'onduleur 53 et au moins une borne 54, 55 d'alimentation en électricité du moteur électrique 5.

Par ailleurs, le système de surveillance 1 peut comporter au moins un deuxième senseur 26 mesurant une deuxième information de couple représentative d'un deuxième couple moteur C2 transmis par le second arbre moteur 18 au second arbre d'entrée 12.

Avantageusement, un second senseur 26 peut comporter un couplemètre 27 mesurant directement le deuxième couple moteur C2.

La mémoire 30 peut ainsi également permettre de stocker une deuxième valeur limite VL2 relative au deuxième couple moteur C2.

De même, le contrôleur 31 peut recevoir ou calculer le deuxième couple moteur C2 pour ensuite comparer le deuxième couple moteur C2 avec la deuxième valeur limite VL2.

Le contrôleur 31 peut alors générer un ordre de commande pour commander un second dispositif réversible de transmission 61, 71 configuré pour transmettre, et alternativement, empêcher la transmission du deuxième couple moteur C2.

Un tel second dispositif réversible de transmission 61, 71 est ainsi commandé par le contrôleur 31 pour permettre au second arbre moteur 18 d'entraîner en rotation le second arbre d'entrée 12 lorsque le deuxième couple moteur C2 est inférieur la deuxième valeur limite VL2.

Alternativement, le second dispositif réversible de transmission 61, 71 peut être commandé par le contrôleur 31 pour empêcher le second arbre moteur 18 d'entraîner en rotation le second arbre d'entrée 12 lorsque le deuxième couple moteur C2 est supérieur ou égal à la deuxième valeur limite VL2.

Telle que représentée à la figure 5, une première variante de ce second dispositif réversible de transmission 61 peut comporter un second embrayage 62 positionné dans la deuxième liaison mécanique 13.

Ce second embrayage 62 reçoit ainsi un ordre de commande du contrôleur 31 pour être dans un état embrayé lorsque le deuxième couple moteur C2 est inférieur à la deuxième valeur limite VL2.

Alternativement, l'embrayage 62 reçoit un autre ordre de commande du contrôleur 31 pour être dans un état débrayé lorsque le deuxième couple moteur C2 est égal ou supérieur à la deuxième valeur limite VL2. Dès lors, l'embrayage 62 permet, dans son état débrayé, d'empêcher la transmission du deuxième couple moteur C2 au second arbre d'entrée 12.

Telle que représentée à la figure 6, une deuxième variante de ce second dispositif réversible de transmission 71 peut comporter un doseur de carburant 72 alimentant en carburant le moteur thermique 8. Le doseur de carburant 72 reçoit un ordre de commande du contrôleur 31 pour être dans un état passant avec un débit non nul de carburant lorsque le deuxième couple moteur C2 est inférieur à la deuxième valeur limite VL2.

Alternativement, lorsque ledit deuxième couple moteur C2 est supérieur ou égal à ladite deuxième valeur limite VL2, le doseur de carburant 72 reçoit un autre ordre de commande du contrôleur 31 pour être dans un état bloqué sans débit de carburant empêchant l'alimentation en carburant du moteur thermique 8 et empêchant alors le deuxième couple moteur C2 d'être transmis au second arbre d'entrée 12.

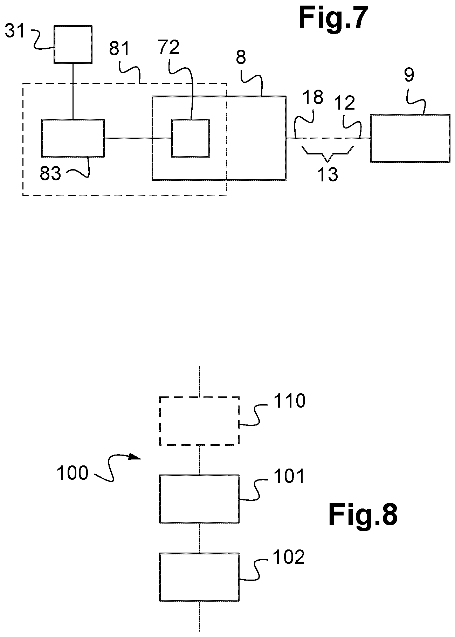

Telle que représentée à la figure 7, une troisième variante de ce second dispositif réversible de transmission 81 peut comporter un une valve de fermeture 83 agencée en amont du doseur de carburant 72 alimentant en carburant le moteur thermique 8. La valve de fermeture 83 reçoit un ordre de commande du contrôleur 31 pour être dans une position ouverte avec un débit non nul de carburant lorsque le deuxième couple moteur C2 est inférieur à la deuxième valeur limite VL2.

Alternativement, lorsque ledit deuxième couple moteur C2 est supérieur ou égal à la deuxième valeur limite VL2, la valve de fermeture 83 reçoit un autre ordre de commande du contrôleur 31 pour être dans une position fermée pour couper le débit de carburant et empêcher l'alimentation en carburant du moteur thermique 8. Le deuxième couple moteur C2 ne peut, dans ce cas, plus être transmis au second arbre d'entrée 12.

En outre, selon la figure 1, le système de surveillance 1 peut également comporter au moins un troisième senseur 28 mesurant une troisième information de couple représentative d'un troisième couple moteur C3 transmis par l'arbre de sortie 20 audit au moins un rotor 4.

La mémoire 30 peut ainsi permettre de stocker une troisième valeur limite VL3 relative au troisième couple moteur C3.

Par suite, le contrôleur 31 peut alors comparer le troisième couple moteur C3 avec la troisième valeur limite VL3 et générer au moins un ordre de commande transmis à l'un au moins des dispositifs réversibles de transmission 41, 51, 61, 71 parmi les premier et second dispositifs réversibles de transmission.

En outre, le ou les dispositifs réversibles de transmission 41, 51, 61, 71 sont alors commandés pour permettre aux premier et second arbres moteur 15, 18 d'entraîner en rotation les premier et second arbres d'entrée 10, 12 lorsque le troisième couple moteur C3 est inférieur la troisième valeur limite VL3 et pour empêcher un au moins des premier et second arbres moteur 15, 18 d'entraîner en rotation respectivement le premier ou le second arbre d'entrée 10, 12 lorsque le troisième couple moteur C3 est supérieur ou égal à la troisième valeur limite VL3.

Le système de surveillance 1 peut également comprendre un alerteur apte à générer une première alerte et une deuxième alerte différentes l'une de l'autre. Chaque alerte peut prendre la forme d'une alarme visuelle, par exemple par le biais de l'émission d'une lumière avec une diode électroluminescente ou un équivalent ou de l'affichage sur un écran d'un ou plusieurs caractères, d'une alarme sonore par le biais d'un haut-parleur, et/ou d'une alarme haptique, par exemple à l'aide d'une unité vibrante faisant vibrer un organe tenu ou porté par un individu.

Par exemple, une première alerte peut être générée lorsque le premier couple moteur C1 est supérieur ou égal à une première valeur d'alerte VA1 et une deuxième alerte peut être générée lorsque le premier couple moteur C1 est supérieur ou égal à une deuxième valeur d'alerte VA2 supérieure à la première valeur d'alerte VA1.

La première valeur d'alerte VA1 est ainsi choisie inférieure à la première valeur limite VL1. La deuxième valeur d'alerte VA2 peut est quant à elle choisie inférieure ou égale à la première valeur limite VL1.

La première alerte peut être un message ou un avis affiché sur un afficheur à destination du pilote du giravion.

La deuxième alerte peut être un signal lumineux et/ou sonore à destination du pilote du giravion.

Telle que représentée à la figure 8, l'invention se rapporte également à un procédé de surveillance 100 pour surveiller une installation motrice hybride 2 précitée de giravion 3 comportant au moins un rotor 4.

Un tel procédé de surveillance 100 comporte alors une mesure 101 avec ledit au moins un premier senseur 16, 17, 19 de la première information de couple représentative du premier couple moteur C1, puis une comparaison 102 avec le contrôleur 31 entre le premier couple moteur C1 et la première valeur limite VL1.

Le procédé de surveillance 100 comporte alors une commande 103 avec le contrôleur 31 d'un premier dispositif réversible de transmission 41, 51 configuré pour transmettre, et alternativement, empêcher la transmission du premier couple moteur C1.

Avantageusement, le procédé de surveillance 100 peut comporter une étape préliminaire de mémorisation 110 de la première valeur limite VL1 dans la mémoire 30.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Système de surveillance (1) pour surveiller une installation motrice hybride (2) de giravion (3) comportant au moins un rotor (4), ladite installation motrice hybride (2) comportant :

   - un moteur électrique (5) connecté électriquement par une liaison électrique (6) à au moins une source d'énergie électrique (7), ledit moteur électrique (5) comportant un premier arbre moteur (15),
   - un moteur thermique (8) comportant un second arbre moteur (18), et
   - une boite de transmission de puissance (9) comportant :

      ◦ un premier arbre d'entrée (10) connecté par une première liaison mécanique (11) au premier arbre moteur (15),
      ◦ un second arbre d'entrée (12) connecté par une deuxième liaison mécanique (13) au second arbre moteur (18), et
   ◦ un arbre de sortie (20) connecté par une troisième liaison mécanique (21) audit au moins un rotor (4),

ledit système de surveillance (1) comportant :

   - au moins un premier senseur (16, 17, 19) mesurant une première information de couple représentative d'un premier couple moteur C1 transmis par ledit premier arbre moteur (15) audit premier arbre d'entrée (10), et
   - une mémoire (30) stockant une première valeur limite VL1 relative audit premier couple moteur C1,

**caractérisé en ce que** ledit système de surveillance (1) comporte un contrôleur (31) comparant ledit premier couple moteur C1 avec ladite première valeur limite VL1 et commandant en conséquence un premier dispositif réversible de transmission (41, 51) configuré pour transmettre, et alternativement empêcher la transmission dudit premier couple moteur C1, ledit premier dispositif réversible de transmission (41, 51) étant commandé pour permettre audit premier arbre moteur (15) d'entraîner en rotation ledit premier arbre d'entrée (10) lorsque ledit premier couple moteur C1 est inférieur à ladite première valeur limite VL1 et pour empêcher ledit premier arbre moteur (15) d'entraîner en rotation ledit premier arbre d'entrée (10) lorsque ledit premier couple moteur C1 est supérieur ou égal à ladite première valeur limite VL1.

2. Système selon la revendication 1,
**caractérisé en ce que** ledit premier dispositif réversible de transmission (41) comporte un premier embrayage (42) positionné dans ladite première liaison mécanique (11), ledit premier embrayage (42) étant agencé dans un état embrayé lorsque ledit premier couple C1 est inférieur à ladite première valeur limite VL1 et ledit premier embrayage (42) étant agencé dans un état débrayé lorsque ledit premier couple C1 est supérieur ou égal à ladite première valeur limite VL1.

3. Système selon la revendication 1,
**caractérisé en ce que** ledit premier dispositif réversible de transmission (51) comporte un commutateur électrique (52) positionné dans ladite liaison électrique (6), ledit commutateur électrique (52) étant agencé dans un état fermé lorsque ledit premier couple C1 est inférieur à ladite première valeur limite VL1 et ledit commutateur électrique (52) étant agencé dans un état ouvert lorsque ledit premier couple C1 est supérieur ou égal à ladite première valeur limite VL1.

4. Système selon la revendication 3,
**caractérisé en ce que** ladite liaison électrique (6) comporte un onduleur (53) transformant un courant électrique continu de l'électricité stockée dans ladite au moins une source d'énergie électrique (7) en un courant électrique alternatif alimentant en électricité ledit moteur électrique (5), ledit commutateur électrique (52) étant positionné selon un sens de circulation dudit courant électrique entre ladite au moins une source d'énergie électrique (7) et ledit onduleur (53).

5. Système selon la revendication 3,
**caractérisé en ce que** ladite liaison électrique (6) comporte un onduleur (53) transformant un courant électrique continu de l'électricité stockée dans ladite au moins une source d'énergie électrique (7) en un courant électrique alternatif alimentant en électricité ledit moteur électrique (5), ledit commutateur électrique (52) étant positionné selon un sens de circulation du courant électrique entre ledit onduleur (53) et au moins une borne (54, 55) d'alimentation en électricité dudit moteur électrique (5).

6. Système selon l'une quelconque des revendications 1 à 5,
**caractérisé en ce que** ledit au moins un premier senseur (16, 17, 19) comporte, d'une part, un capteur de tension (16) mesurant une tension électrique d'alimentation entre deux bornes (54, 55) d'alimentation en électricité dudit moteur électrique (5) et , d'autre part, un capteur d'intensité (17) mesurant une intensité électrique d'un courant électrique d'alimentation circulant dans ladite liaison électrique (6).

7. Système selon l'une quelconque des revendications 1 à 6,
**caractérisé en ce que** ledit au moins un premier senseur (16, 17, 19) comporte un capteur de vitesse de rotation (19) mesurant une vitesse de rotation dudit premier arbre moteur (15) par rapport à un carter (25) dudit moteur électrique (5).

8. Système selon l'une quelconque des revendications 1 à 7,
**caractérisé en ce que** ledit système de surveillance (1) comporte :

- au moins un deuxième senseur (26) mesurant une deuxième information de couple représentative d'un deuxième couple moteur C2 transmis par ledit second arbre moteur (18) audit second arbre d'entrée (12),
- ladite mémoire (30) stockant une deuxième valeur limite VL2 relative audit deuxième couple moteur C2, et
- ledit contrôleur (31) comparant ledit deuxième couple moteur C2 avec ladite deuxième valeur limite VL2 et commandant un second dispositif réversible de transmission (61, 71, 81) configuré pour transmettre, et alternativement empêcher la transmission dudit deuxième couple moteur C2, ledit second dispositif réversible de transmission (61, 71, 81) étant commandé pour permettre audit second arbre moteur (18) d'entraîner en rotation ledit second arbre d'entrée (12) lorsque ledit deuxième couple moteur C2 est inférieur ladite deuxième valeur limite VL2 et pour empêcher ledit second arbre moteur (18) d'entraîner en rotation ledit second arbre d'entrée (12) lorsque ledit deuxième couple moteur C2 est supérieur ou égal à ladite deuxième valeur limite VL2.

9. Système selon la revendication 8,
**caractérisé en ce que** ledit second dispositif réversible de transmission (61) comporte un second embrayage (62) positionné dans ladite deuxième liaison mécanique (13), ledit second embrayage (62) étant agencé dans un état embrayé lorsque ledit deuxième couple moteur C2 est inférieur à ladite deuxième valeur limite VL2 et ledit embrayage (62) étant agencé dans un état débrayé lorsque ledit deuxième couple C2 est supérieur ou égal à ladite deuxième valeur limite VL2.

10. Système selon la revendication 8,
**caractérisé en ce que** ledit second dispositif réversible de transmission (71) comporte un doseur de carburant (72) alimentant en carburant ledit moteur thermique (8), ledit doseur de carburant (72) étant agencé dans un état passant avec un débit de carburant non nul lorsque ledit deuxième couple moteur C2 est inférieur à ladite deuxième valeur limite VL2 et ledit doseur de carburant (72) étant agencé dans un état bloqué sans débit de carburant lorsque ledit deuxième couple moteur C2 est égal ou supérieur à ladite deuxième valeur limite VL2.

11. Système selon la revendication 8,
**caractérisé en ce que** ledit second dispositif réversible de transmission (81) comporte une valve de coupure (83) alimentant en carburant un doseur de carburant (82), ladite valve de coupure (83) étant agencée en position ouverte avec un débit de carburant non nul lorsque ledit deuxième couple moteur C2 est inférieur à ladite deuxième valeur limite VL2 et ladite valve de coupure (83) étant agencée dans une position fermée pour couper le débit de carburant lorsque ledit deuxième couple moteur C2 est égal ou supérieur à ladite deuxième valeur limite VL2.

**12.** Système selon l'une quelconque des revendications 8 à 11,
**caractérisé en ce que** ledit au moins un second senseur (26) comporte un couplemètre (27) mesurant directement ledit deuxième couple moteur C2.

**13.** Système selon l'une quelconque des revendications 8 à 12,
**caractérisé en ce que** ledit système de surveillance (1) comporte :

- au moins un troisième senseur (28) mesurant une troisième information de couple représentative d'un troisième couple moteur C3 transmis par ledit arbre de sortie (20) audit au moins un rotor (4),
- ladite mémoire (30) stockant une troisième valeur limite VL3 relative audit troisième couple moteur C3, et
- ledit contrôleur (31) comparant ledit troisième couple moteur C3 avec ladite troisième valeur limite VL3 et commandant au moins un dispositif réversible de transmission (41, 51, 61, 71) parmi lesdits premier et second dispositifs réversibles de transmission, ledit au moins un dispositif réversible de transmission (41, 51, 61, 71) étant commandé pour permettre auxdits premier et second arbres moteur (15, 18) d'entraîner en rotation lesdits premier et second arbres d'entrée (10, 12) lorsque ledit troisième couple moteur C3 est inférieur ladite troisième valeur limite VL3 et pour empêcher un au moins desdits premier et second arbres moteur (15, 18) d'entraîner en rotation respectivement ledit premier ou ledit second arbre d'entrée (10, 12) lorsque ledit troisième couple moteur C3 est supérieur ou égal ladite troisième valeur limite VL3.

**14.** Système selon la revendication 13,
**caractérisé en ce que**, lorsque ledit troisième couple moteur C3 est supérieur ou égal à ladite troisième valeur limite VL3, ledit contrôleur (31) commande d'abord ledit premier dispositif réversible de transmission (41, 51) pour empêcher ledit premier arbre moteur (15) d'entraîner en rotation ledit premier arbre d'entrée (10) puis ledit contrôleur (31) commande ledit second dispositif réversible de transmission (61, 71) pour empêcher ledit second arbre moteur (18) d'entraîner en rotation ledit second arbre d'entrée (12).

**15.** Système selon la revendication 13,
**caractérisé en ce que**, lorsque ledit troisième couple moteur C3 est supérieur ou égal à ladite troisième valeur limite VL3, ledit contrôleur (31) commande simultanément ledit premier dispositif réversible de transmission (41, 51) pour empêcher ledit premier arbre moteur (15) d'entraîner en rotation ledit premier arbre d'entrée (10) et ledit second dispositif réversible de transmission (61, 71) pour empêcher ledit second arbre moteur (18) d'entraîner en rotation ledit second arbre d'entrée (12).

**16.** Giravion (3) comportant une installation motrice hybride (2) et au moins un rotor (4), ladite installation motrice hybride (2) comportant :

- un moteur électrique (5) connecté électriquement par une liaison électrique (6) à au moins une source d'énergie électrique (7), ledit moteur électrique (5) comportant un premier arbre moteur (15),
- un moteur thermique (8) comportant un second arbre moteur (18), et
- une boite de transmission de puissance (9) comportant :

○ un premier arbre d'entrée (10) connecté par une première liaison mécanique (11) au premier arbre moteur (15),
○ un second arbre d'entrée (12) connecté par une deuxième liaison mécanique (13) au second arbre moteur (18), et
○ un arbre de sortie (20) connecté par une troisième liaison mécanique (21) au dit au moins un rotor (4),

**caractérisé en ce que** ledit giravion (3) comporte un système de surveillance (1) de ladite installation motrice hybride (2) selon l'une quelconque des revendications 1 à 15.

**17.** Procédé de surveillance (100) pour surveiller une installation motrice hybride (2) de giravion (3) comportant au moins un rotor (4), ladite installation motrice hybride (2) comportant :

- un moteur électrique (5) connecté électriquement par une liaison électrique (6) à au moins une source d'énergie électrique (7), ledit moteur électrique (5) comportant un premier arbre moteur (15),
- un moteur thermique (8) comportant un second arbre moteur (18), et
- une boite de transmission de puissance (9) comportant :

○ un premier arbre d'entrée (10) connecté par une première liaison mécanique (11) audit premier arbre moteur (15),
○ un second arbre d'entrée (12) connecté par une deuxième liaison mécanique (13) audit second arbre moteur (18), et
○ un arbre de sortie (20) connecté par une troisième liaison mécanique (21) audit au moins un rotor (4),

ledit procédé de surveillance (100) comportant au moins les étapes suivantes :

- mesure (101) avec au moins un premier senseur (16, 17, 19) d'une première information de couple représentative d'un premier couple moteur C1 transmis par ledit premier arbre moteur (15) audit premier arbre d'entrée (10), et
- comparaison (102) avec un contrôleur (31) entre ledit premier couple moteur C1 et une première valeur limite VL1,

**caractérisé en ce que** ledit procédé de surveillance (100) comporte une commande (103) avec ledit contrôleur (31) d'un premier dispositif réversible de transmission (41, 51) configuré pour transmettre, et alternativement, empêcher la transmission dudit premier couple moteur C1, ledit premier dispositif réversible de transmission (41, 51) étant commandé pour permettre audit premier arbre moteur (15) d'entraîner en rotation ledit premier arbre d'entrée (10) lorsque ledit premier couple moteur C1 est inférieur à ladite première valeur limite VL1 et pour empêcher ledit premier arbre moteur (15) d'entraîner en rotation ledit premier arbre d'entrée (10) lorsque ledit premier couple moteur C1 est supérieur ou égal à ladite première valeur limite VL1.

**Fig.1**

**Fig.2**

**Fig.3**

**Fig.4**

**Fig.5**

**Fig.6**

**Fig.7**

**Fig.8**

**RAPPORT DE RECHERCHE EUROPEENNE**

Europäisches Patentamt
European Patent Office
Office européen des brevets

Numéro de la demande

EP 24 19 6498

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2019/382124 A1 (MASSOT LUCIE [FR] ET AL) 19 décembre 2019 (2019-12-19) * abrégé; figure 1 * * alinéas [0017], [0061], [0071] - [0082], [0093] - [0095], [0101] * ----- | 1-17 | INV. B64C27/00 B64C27/12 B64D27/02 B64D27/33 B64D35/08 |
| A | FR 3 122 407 A1 (AIRBUS HELICOPTERS [FR]) 4 novembre 2022 (2022-11-04) * abrégé; figures 1,2 * ----- | 1-17 | ADD. B64D45/00 |
| A | US 2020/277072 A1 (ZOPPITELLI ELIO [FR] ET AL) 3 septembre 2020 (2020-09-03) * abrégé; figure 2 * * alinéas [0021], [0081] * ----- | 6 | |

**DOMAINES TECHNIQUES RECHERCHES (IPC)**

B64C
B64D

Le présent rapport a été établi pour toutes les revendications

| Lieu de la recherche | Date d'achèvement de la recherche | Examinateur |
|---|---|---|
| Munich | 11 novembre 2024 | Leoty, David |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 19 6498

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-11-2024

| Document brevet cité au rapport de recherche | Date de publication | Membre(s) de la famille de brevet(s) | Date de publication |
|---|---|---|---|
| US 2019382124 A1 | 19-12-2019 | FR 3082504 A1 | 20-12-2019 |
| | | US 2019382124 A1 | 19-12-2019 |
| FR 3122407 A1 | 04-11-2022 | EP 4082916 A1 | 02-11-2022 |
| | | FR 3122407 A1 | 04-11-2022 |
| US 2020277072 A1 | 03-09-2020 | CA 3064098 A1 | 05-03-2020 |
| | | CN 111348202 A | 30-06-2020 |
| | | EP 3670339 A1 | 24-06-2020 |
| | | FR 3090576 A1 | 26-06-2020 |
| | | KR 20200077451 A | 30-06-2020 |
| | | US 2020277072 A1 | 03-09-2020 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019382124 D1
- FR 3122407
- US 2020277072 A